**Europäisches Patentamt**

**European Patent Office**

**Office européen des brevets**

(19)

(11) Veröffentlichungsnummer: **0 283 828**
**B1**

(12) **EUROPÄISCHE PATENTSCHRIFT**

(45) Veröffentlichungstag der Patentschrift:
27.06.90

(51) Int. Cl.⁵: **F16D 3/00**, F16D 3/30, F16D 3/50

(21) Anmeldenummer: 88103556.2

(22) Anmeldetag: 08.03.88

(54) Kupplung.

(30) Priorität: 20.03.87 DE 3709132

(43) Veröffentlichungstag der Anmeldung:
28.09.88 Patentblatt 88/39

(45) Bekanntmachung des Hinweises auf die Patenterteilung:
27.06.90 Patentblatt 90/26

(84) Benannte Vertragsstaaten:
CH DE ES FR GB IT LI NL

(56) Entgegenhaltungen:
DE-C- 512 921
FR-A- 732 510
FR-A- 2 120 493
US-A- 2 580 781
US-A- 3 924 420

(73) Patentinhaber: RENK TACKE GmbH, Gögginger Strasse 73, D-8900 Augsburg(DE)

(72) Erfinder: Heinemann, Otto Friedrich, Dipl.-Ing., Galileistrasse 8, D-4722 Ennigerloh(DE)

## Beschreibung

Die Erfindung betrifft eine nichtschaltbare Kupplung entsprechend dem Oberbegriff des Anspruches 1.

Nichtschaltbare Kupplungen werden üblicherweise in starre Kupplungen und Ausgleichskupplungen unterteilt. Während bei starren Kupplungen die Drehmomentübertragung unmittelbar ohne jede Nachgiebigkeit erfolgt, sind Ausgleichskupplungen demgegenüber in der Lage, gewisse Wellenverlagerungen und Ungleichförmigkeiten des Drehmoments auszugleichen. Zu diesen Ausgleichskupplungen gehören gelenkige Kupplungen, die Längsverschiebungen, Parallelverschiebungen und Winkelabweichungen der Wellen aufnehmen, und drehfedernde Kupplungen (wie z.B. in DE-C 512 921 beschrieben), die Drehschwingungen und Drehmomentenstöße ausgleichen können.

Der Erfindung liegt die Aufgabe zugrunde, eine nichtschaltbare Kupplung zu schaffen, die sich bei einfacher Bauweise und geringer Baugröße (insbesondere kleiner Baulänge) durch einen großen Achsversatz, einen großen Radialversatz sowie einen großen Winkelversatz (über 10°) auszeichnet. Darüber hinaus soll die Drehstabilität der erfindungsgemäßen Kupplung konstruktiv in weiten Grenzen (zwischen hoher Drehsteifigkeit und hoher Drehelastizität) beliebig einstellbar sein. Schließlich ist es ein Ziel der Erfindung, die Kupplung auch bei einer gewünschten hohen Dreh elastizität als Ganzstahlkupplung auszubilden.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Zwei Ausführungsbeispiele der Erfindung sind in der Zeichnung veranschaulicht. Es zeigen

Fig. 1 eine teilweise geschnittene Längsansicht eines ersten Ausführungsbeispieles der Erfindung,
Fig. 2 eine Stirnansicht der Kupplung gemäß Fig.1,
Fig. 3 einen Längsschnitt durch ein zweites Ausführungsbeispiel,
Fig. 4 eine teilweise geschnittene Stirnansicht der Ausfuhrung gemäß Fig. 3.

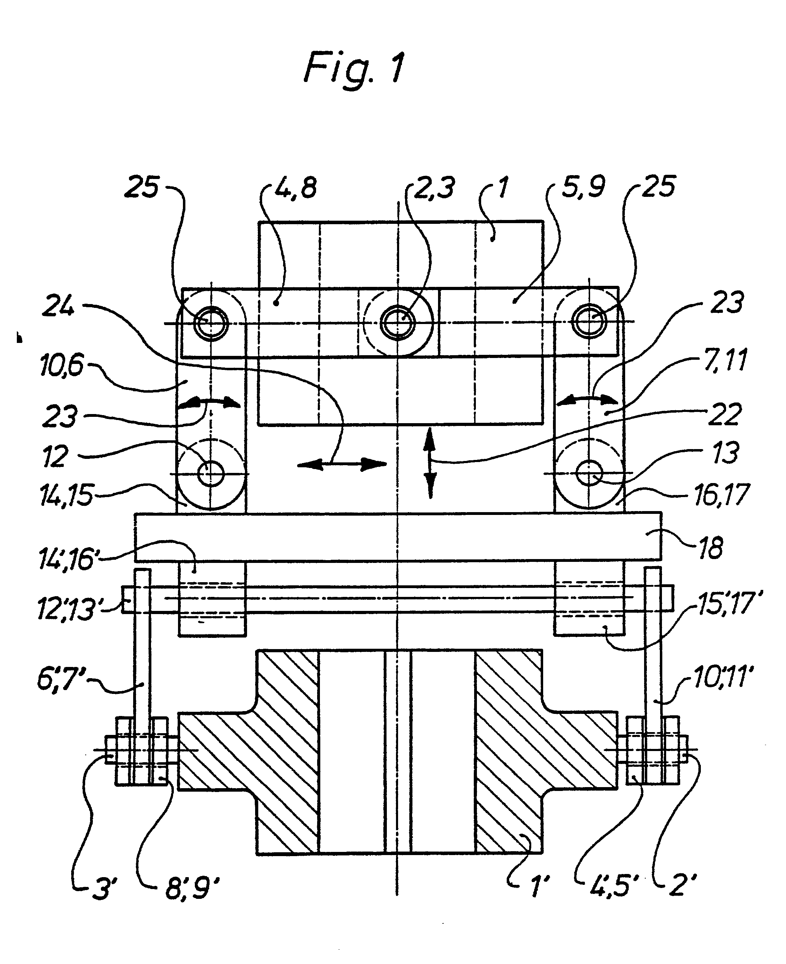

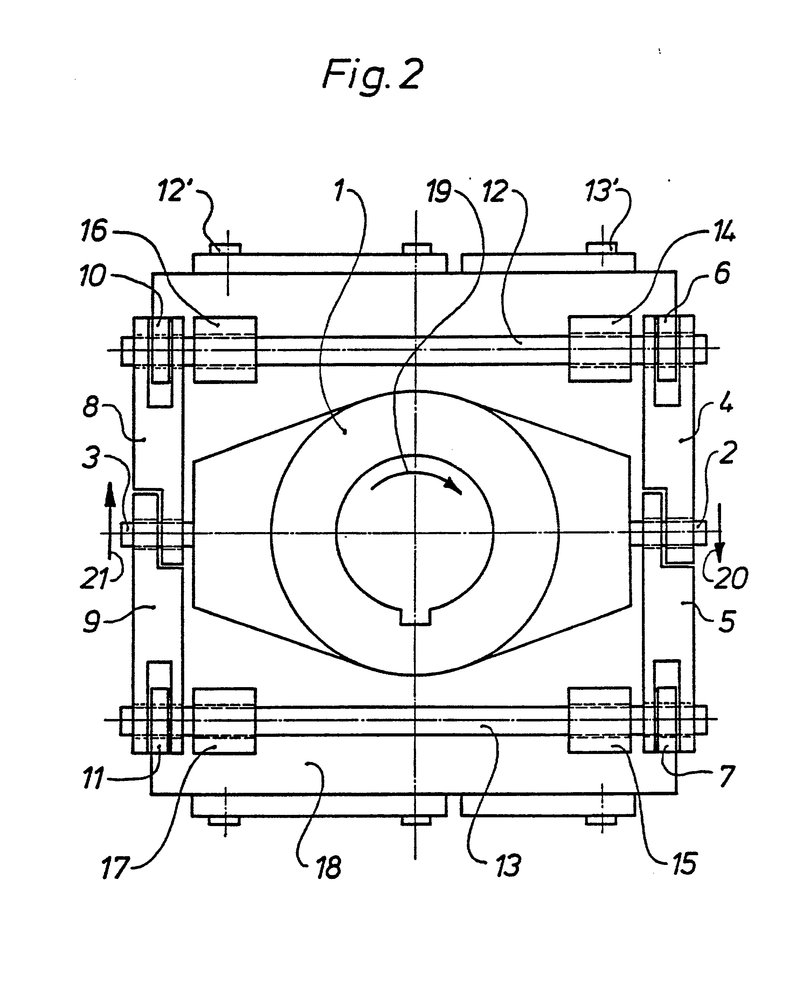

Die in den Fig. 1 und 2 dargestellte Kupplung enthält zwei8 Naben 1, 1', die an zwei einander abgewandten Außenseiten je eine Achse 2, 3 bzw. 2', 3' tragen.

Auf der Achse 2 sind zwei Koppeln 4, 5 gelenkig gelagert, die an ihrem anderen Ende mit je einem Koppelhebel 6 bzw. 7 gelenkig verbunden sind.

In entsprechender Weise sind auf der Achse 3 zwei Koppeln 8, 9 gelenkig gelagert, die mit Koppelhebeln 10, 11 in gelenkiger Verbindung stehen.

Die Koppelhebel 6 und 10 sind drehfest an den beiden Enden einer Koppelachse 12 befestigt. In entsprechender Weise sitzen die Koppelhebel 7 und 11 drehfest auf den Enden einer Koppelachse 13.

Die beiden Koppelachsen 12 und 13 sind als Torsionsfederstäbe ausgebildet und in Lagern 14, 15 bzw. 16, 17 drehbar gelagert.

Die genannten Lager 14 bis 17 sind auf der einen Seite eines als rechteckige bzw. quadratische Platte ausgebildeten Zwischenträgers 18 angebracht bzw. einstückig mit diesem ausgebildet.

Die Verbindung zwischen der Nabe 1' und dem Zwischenträger 18 entspricht der vorstehend erläuterten Verbindung zwischen der Nabe 1 und dem Zwischenträger 18. Entsprechende Bauteile sind - soweit in der Zeichnung sichtbar - mit denselben Bezugszeichen (jeweils unter Hinzufügung eines Striches) bezeichnet.

Wie insbesondere Fig. 2 erkennen läßt, sind die zur Nabe 1 gehörenden Koppelachsen 12, 13 außermittig und symmetrisch zur Nabe 1 angeordnet. Entsprechendes gilt auch für die Koppelachsen 12', 13', die der Nabe 1' zugeordnet sind.

Die beiden Koppelachsenpaare 12, 13 und 12', 13' sind in parallel zueinander liegenden Ebenen auf unterschiedlichen Seiten des Zwischenträgers 18 vorgesehen und um 90° gegeneinander versetzt.

Die Funktion der Kupplung gemäß den Fig. 1 und 2 ist damit wie folgt:

Das zu übertragende Drehmoment wird in Umfangskräfte zerlegt, die von den Koppeln 4, 5, 8, 9 als Zug- und Druckkräfte übertragen werden. Wird beispielsweise von der Nabe 1 ein in Richtung des Pfeiles 19 wirkendes Drehmoment übertragen, so bewegen sich die Koppeln 4 und 5 in Richtung des Pfeiles 20 und die Koppeln 8 und 9 in Richtung des Pfeiles 21. Über die Koppelhebel 6, 10 bzw. 7, 11 werden damit die Koppelachsen 12, 13 gleichsinnig auf Torsion beansprucht. Für die beiden anderen Koppelachsen 12', 13' gilt Entsprechendes. Durch diese Torsionsbeanspruchung der beiden Koppelachsenpaare wird die gewünschte Drehelastizität der Kupplung erreicht.

Erfolgt eine Axialverschiebung der Nabe 1 relativ zur Nabe 1' (beispielsweise in Richtung des Pfeiles 22), so werden die Koppelhebel 6, 7, 10, 11 über die Koppeln 4, 5, 8, 9 etwas nach innen (in Richtung der Pfeile 23) gezogen. Die Koppelachsen 12, 13 drehen sich hierbei geringfügig im entgegengesetzten Sinne in ihren Lagern 14, 15 bzw. 16, 17. Auf diese Weise ist eine beträchtliche Axial verschiebung der beiden Naben 1, 1' relativ zueinander möglich.

Bewegt sich die Nabe 1 in radialer Richtung (beispielsweise in Richtung des Pfeiles 24) relativ zur Nabe 1', so werden die Koppelachsen 12, 13 (über die Koppeln 4, 5, 8, 9 und die Koppelhebel 6, 7, 10, 11) gleichsinnig in ihren Lagern gedreht Es leuchtet ein, daß durch die um 90° gegeneinander versetzte Anordnung der beiden Koppelachsenpaare 12, 13 und 12', 13' Radialverschiebungen der beiden Naben 1, 1' in beliebigen Richtungen aufgenommen werden können.

Eine Betrachtung der Fig. 1 und 2 läßt schließlich auch erkennen, daß bei der erfindungsgemäßen Kupplung auch Winkelverschiebungen zwischen den beiden Naben 1, 1' in beträchtlichem Maß (über 10°) möglich sind. Wird beispielsweise die Nabe 1 so gekippt, daß in Fig. 2 die Achse 2 uber der Zeichenebene und die Achse 3 unter der Zeichenebene zu liegen kommt, so werden hierdurch die Koppelhebel 6, 7 und 10, 11 etwas nach innen bewegt, was eine gegensinnige Drehung der Koppelachsen 12, 13 zur Folge hat.

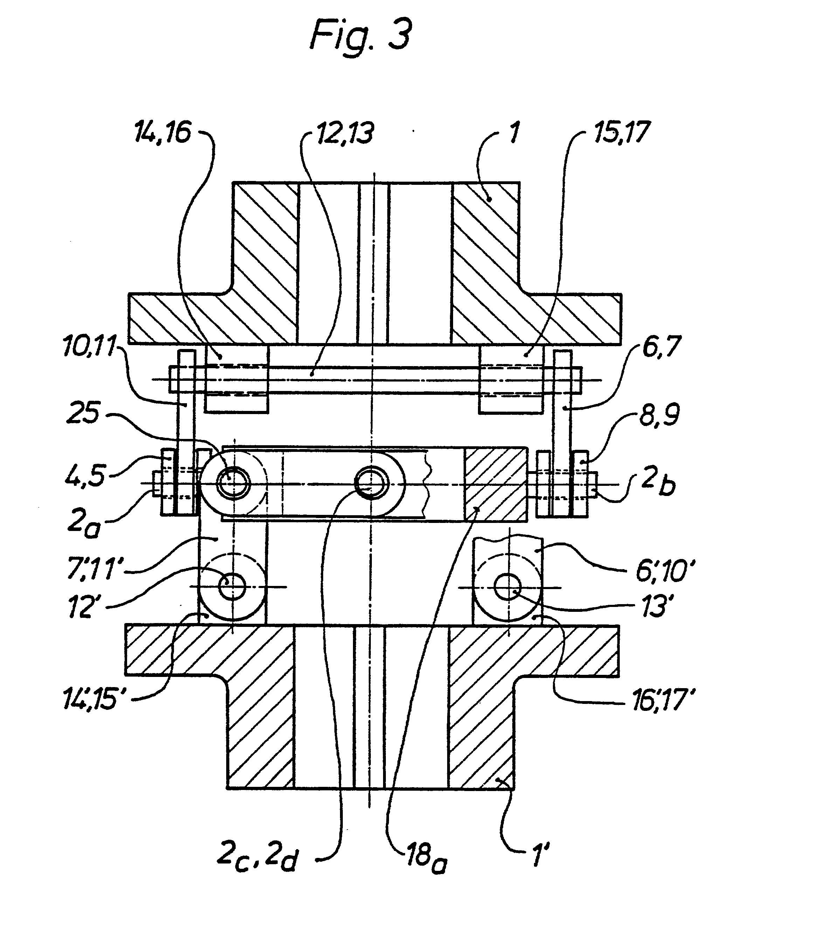

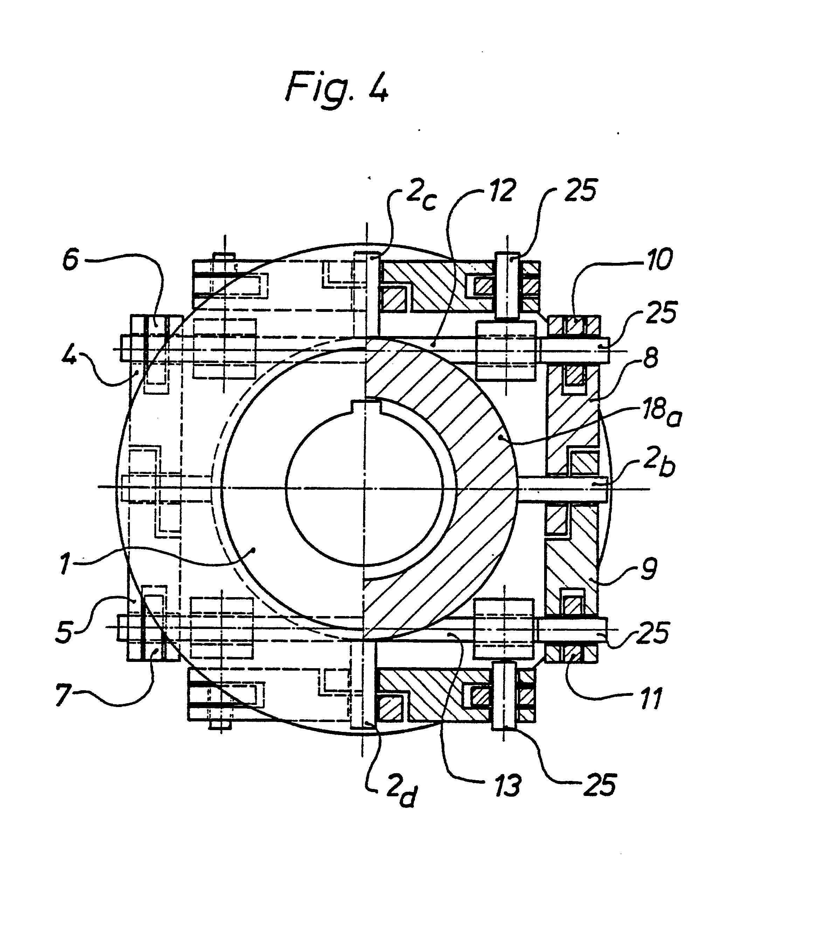

Bei dem in den Fig 3 und 4 dargestellten zweiten Ausführungsbeispiel der Erfindung sind einander entsprechende gleiche Bauteile mit den gleichen Bezugszeichen wie in den Fig. 1 und 2 versehen.

Die Koppelachsen 12, 13 sind hierbei in Lagern (z. B. 14, 15) der beiden Naben 1, 1' drehbar gelagert.

Die zu unterschiedlichen Koppelachsen (z. B. 12, 13) desselben Koppelachsenpaares gehörenden Koppeln (z. B. 4, 5) sind hierbei über Achsen 2a bzw. 2b, 2c, 2d verbunden, die an der Außenseite des ringförmig ausgebildeten Zwischenträgers 18a fest angeordnet bzw. einstückig mit diesem ausgebildet sind.

Ebenso wie bei dem Ausführungsbeispiel gemäß Fig.1 sind die Koppelhebel 6, 7, 10, 11 drehfest mit den Enden der Koppelachsen 12, 13 verbunden.

Die Gelenkverbindung zwischen den Koppeln 4, 5, 8, 9 und den Koppelhebeln 6, 7, 10, 11 erfolgt (ebenso wie beim Ausführungsbeispiel gemäß Fig. 1) über Gelenkbolzen 25.

Bei diesem Ausführungsbeispiel ist der als Ring ausgebildete Zwischenträger 18a an vier um 90° gegeneinander versetzten Umfangsstellen über die bereits erwähnten Achsen 2a, 2b, 2c, 2d mit den Koppelpaaren (z. B. 4, 5) verbunden.

Die Funktion dieses zweiten Ausführungsbeispieles entspricht der bereits erläuterten Anordnung gemäß den Fig. 1 und 2.

**Patentansprüche**

1. Nichtschaltbare Kupplung, enthaltend zwei Naben sowie die beiden Naben miteinander verbindende Kupplungsteile, wobei jeder der beiden Naben(1, 1') ein Koppelachsenpaar (12, 13 bzw. 12', 13') zugeordnet ist, dessen zwei Koppelachsen außermittig und symmetrisch zur betreffenden Nabe angeordnet sind; die beiden Koppelachsenpaare (12, 13 und 12', 13') in parallel zueinander liegenden Ebenen auf unterschiedlichen Seiten eines Zwischenträgers (18, 18a) angeordnet und um 90° gegeneinander versetzt sind; gekennzeichnet durch folgende Merkmale:

a) mit den Enden jeder Koppelachse (z. B. 12, 13) ist jeweils ein Ende eines Koppelhebels (6, 7, 10, 11) drehfest verbunden;

b) das andere Ende jedes Koppelhebels (6, 7, 10, 11) ist gelenkig mit einer Koppel (4, 5, 8, 9) verbunden;

c) die zu unterschiedlichen Koppelachsen (z. B. 12, 13) desselben Koppelpaares gehörenden Koppeln (4, 5 und 8, 9) sind paarweise gelenkig miteinander verbunden.

2. Kupplung nach Anspruch 1, gekennzeichnet durch folgende weitere Merkmale:

f) die Koppelachsen (12, 13, 12', 13') sind am Zwischenträger (18) drehbar gelagert;

g) die zu unterschiedlichen Koppelachsen(z. B. 12, 13) desselben Koppelachsenpaares gehörenden Koppeln (4, 5, 8, 9) sind über Achsen (2, 3) miteinander verbunden, die an einander abgewandten Außenseiten der zugehörigen Nabe (1) fest angeordnet sind.

3. Kupplung nach Anspruch 2, gekennzeichnet durch folgendes weiteres Merkmal:

h) der Zwischenträger (18) ist als rechteckige Platte ausgebildet, die auf beiden Seiten je vier Lager (14, 15, 16, 17) für die Koppelachsen (12, 13 bzw. 12', 13') der beiden Koppelachsenpaare trägt.

4. Kupplung nach Anspruch 1, gekennzeichnet durch folgende weitere Merkmale:

f) die Koppelachsen (12, 13, 12', 13') sind an den beiden Naben (1, 1') drehbar gelagert;

g) die zu unterschiedlichen Koppelachsen (z. B. 12,13) desselben Koppelachsenpaares gehörenden Koppeln (4, 5, 8, 9) sind über Achsen (z. B. 2a, 2c) miteinander verbunden, die an der Außenseite des Zwischenträgers (18a) fest angeordnet sind.

5. Kupplung nach Anspruch 4, gekennzeichnet durch folgendes weiteres Merkmal:

h) der Zwischenträger (18a) ist als Ring ausgebildet, der an vier um 90° gegeneinander versetzten Umfangsstellen je eine Achse (2a, 2b, 2c, 2d) zur gelenkigen Verbindung zweier Koppeln (z. B. 4, 5) aufweist.

6. Kupplung nach Anspruch 1, dadurch gekennzeichnet, daß die Koppelachsen (12, 13, 12', 13') als Torsionsfederstäbe ausgebildet sind.

**Claims**

1. Fixed-link coupling, comprising two hubs and coupling means connecting the two hubs together, wherein each of the two hubs (1, 1') has associated therewith a pair of coupling shafts (12, 13 and 12', 13') with said two coupling shafts being arranged off-centre and symmetrically in relation to the respective hubs; and wherein the two coupling shaft pairs (12, 13 and 12', 13') are in planes which lie parallel to each other on respective opposite sides of an intermediate carrier (18, 18a) and with the two pairs being offset relative to each other by 90°; characterised by the following features:

a) one end of a coupling lever (6, 7, 10, 11) is connected to each end of each coupling shaft (eg 12, 13) for fixed rotation therewith;

b) the other end of each coupling lever (6, 7, 10, 11) is jointedly connected to a coupler (4, 5, 8, 9);

c) the couplers (4, 5 and 8, 9) linked to the respective coupling shafts (eg 12, 13) of the said coupling shaft pairs are jointedly connected to each other in pairs.

2. Coupling according to claim 1, characterised by the following further features:

f) the coupling shafts (12, 13, 12', 13') are mounted rotatably on the intermediate carrier (18);

g) the couplers (4, 5, 8, 9) associated with the respective coupling shafts (eg 12, 13) of the said coupling shaft pairs are connected to each other by shafts (2, 3) which are arranged fixedly on opposed external surfaces of the associated hub (1).

3. Coupling according to claim 2, characterised by the following further feature:

h) the intermediate carrier (18) is a rectangular plate which carries, on each side, four bearings (14, 15, 16, 17) for the coupling shafts (12, 13 and 12', 13') of the two coupling shaft pairs.

4. Coupling according to claim 1, characterised by the following further features:

f) the coupling shafts (12, 13, 12', 13') are mounted rotatably on the respective hubs (1, 1');

g) the couplers (4, 5, 8, 9) associated with the respective coupling shafts (eg 12, 13) of the said coupling shaft pairs are connected to each other by shafts (eg 2a, 2c) which are arranged fixedly on the outside of the intermediate carrier (18a).

5. Coupling according to claim 4, characterised by the following further feature:

h) the intermediate carrier (18a) is formed as a ring which, at four circumferential locations offset by 90° with respect to each other, has a shaft (2a, 2b, 2c, 2d) for the jointed connection of second couplers (eg 4, 5).

6. Coupling according to claim 1, characterised in that the coupling shafts (12, 13, 12', 13') are torsion spring rods.

**Revendications**

1. Accouplement fixe comprenant deux moyeux, ainsi que des parties d'accouplement solidarisant ces deux moyeux, dans lequel une paire d'axes d'accouplement (12, 13, respectivement 12', 13') est associée à chacun des deux moyeux (1, 1'), paire dont les deux axes d'accouplement occupent des positions excentrées et symétriques par rapport au moyeu considéré; les deux paires d'axes d'accouplement (12, 13 et 12', 13') sont disposées dans des plans mutuellement parallèles, sur des côtés différents d'un support intercalaire (18, 18a), et sont décalées l'une de l'autre de 90°; caractérisé par les particularités suivantes:

a) une extrémité respective d'un levier d'accouplement (6, 7, 10, 11) est assujettie en rotation aux extrémités de chaque axe d'accouplement (par exemple 12, 13);

b) l'autre extrémité de chaque levier d'accouplement (6, 7, 10, 11) est reliée de manière articulée à une bielle (4, 5, 8, 9);

c) les bielles (4, 5 et 8, 9) associées à des axes d'accouplement différents (par exemple 12, 13) de la même paire de bielles sont reliées, par paires, de manière articulée.

2. Accouplement selon la revendication 1, caractérisé par les autres particularités suivantes:

f) les axes d'accouplement (12, 13, 12', 13') sont montés rotatifs sur le support intercalaire (18);

g) les bielles (4, 5, 8, 9), associées à des axes d'accouplement différents (par exemple 12, 13) de la même paire d'axes d'accouplement, sont solidarisées par l'intermédiaire d'axes (2, 3) qui sont calés rigidement sur des côtés extérieurs du moyeu associé (1), tournés à l'opposé l'un de l'autre.

3. Accouplement selon la revendication 2, caractérisé par l'autre particularité suivante:

h) le support intercalaire (18) est réalisé sous la forme d'une plaque rectangulaire qui porte, de part et d'autre, quatre coussinets respectifs (14, 15, 16, 17) pour les axes d'accouplement (12, 13, respectivement 12', 13') des deux paires d'axes d'accouplement.

4. Accouplement selon la revendication 1, caractérisé par les autres particularités suivantes:

f) les axes d'accouplement (12, 13, 12', 13') sont montés rotatifs sur les deux moyeux (1, 1');

g) les bielles (4, 5, 8, 9), associées à des axes d'accouplement différents (par exemple 12, 13) de la même paire d'axes d'accouplement, sont solidarisées par l'intermédiaire d'axes (par exemple 2a, 2c) qui sont calés rigidement sur le côté extérieur du support intercalaire (18a).

5. Accouplement selon la revendication 4, caractérisé par l'autre particularité suivante:

h) le support intercalaire (18a) est réalisé sous la forme d'un anneau qui présente, dans quatre zones périphériques mutuellement décalées de 90°, un axe respectif (2a, 2b, 2c, 2d) en vue de la liaison articulée de deux bielles (par exemple 4, 5).

6. Accouplement selon la revendication 1, caractérisé par le fait que les axes d'accouplement (12, 13, 12', 13') sont réalisés sous la forme de barres de torsion.

Fig. 1

# Fig. 2

# Fig. 3

# Fig. 4